# EUROPEAN PATENT APPLICATION

(11) **EP 4 592 853 A1**
(43) Date of publication of application: **30.07.2025**
(21) Application number: 23876222.3
(22) Date of filing: 27.06.2023
(51) Int. Cl.: G06F 12/02

(54) **SOLID-STATE DRIVE CONFIGURATION METHOD, GARBAGE COLLECTION METHOD AND RELATED DEVICE**

(30) Priority: 11.10.2022 CN 202211243242
(71) Applicant: Huawei Technologies Co., Ltd., Shenzhen, Guangdong 518129 (CN)
(72) Inventor: ZHANG, Ying, Shenzhen, Guangdong 518129 (CN); CAI, Bo, Shenzhen, Guangdong 518129 (CN); GU, Xulin, Shenzhen, Guangdong 518129 (CN); TANG, Qicheng, Shenzhen, Guangdong 518129 (CN)
(74) Representative: Körber, Martin Hans
(86) International application number: PCT/CN2023/102661
(87) International publication number: WO 2024/078012

(57) **Abstract**

This application discloses a solid-state drive configuration method, a garbage collection method, and a related device, and relates to the field of storage technologies. The solid-state drive configuration method includes: obtaining a data type corresponding to a stream supported by a solid-state drive, where the stream corresponds to a partition of the solid-state drive; then determining, based on the data type corresponding to the stream, a garbage collection policy corresponding to the stream; and finally sending the garbage collection policy corresponding to the stream to the solid-state drive. **In** this way, during subsequent garbage collection, garbage collection may be performed on a partition according to a garbage collection policy corresponding to the partition, fully considering that data may be updated and invalid. Therefore, problems such as write amplification attributed to invalid migration caused by collectively performing collection based on a greedy algorithm are resolved.

## Description

This application claims priority to Chinese Patent Application No. 202211243242.4, filed with the China National Intellectual Property Administration on October 11, 2022 and entitled "SOLID-STATE DRIVE CONFIGURATION METHOD, GARBAGE COLLECTION METHOD, AND RELATED DEVICE", which is incorporated herein by reference in its entirety.

### TECHNICAL FIELD

This application relates to the field of storage technologies, and in particular, to a solid-state drive configuration method, a garbage collection method, and a related device.

### BACKGROUND

Because a storage medium (like a flash memory) of a solid-state drive (SSD) does not support overwriting, a redirect-on-write (ROW) mechanism is usually used to update data stored in the solid-state drive. For example, data a is updated to data b, the data a is stored at a location A of the storage medium, the data b after the update is written into another idle location B of the storage medium, and the data a before the update is set to invalid data (garbage).

To release space occupied by the garbage, garbage collection needs to be performed on a physical block (Block) that has a specific amount of garbage. Before data in the physical block is erased, valid data in the physical block needs to be migrated to another idle physical block. However, copying the valid data to the another idle physical block causes additional data writing, that is, causes write amplification (WA) in the solid-state drive. The write amplification in the solid-state drive reduces performance of the solid-state drive, and shortens a service life of the solid-state drive.

### SUMMARY

This application provides a solid-state drive configuration method, a garbage collection method, and a related device, to customize a corresponding garbage collection detection policy based on a data type, so that different types of data can be collected according to different corresponding garbage collection policies, fully considering that data may be updated and invalid. Therefore, problems such as write amplification attributed to invalid migration caused by collectively performing collection based on a greedy algorithm are resolved.

This application provides a solid-state drive configuration method, applied to a storage controller. The method includes: obtaining a data type corresponding to a stream supported by a solid-state drive, where the stream corresponds to a partition of the solid-state drive; determining, based on the data type corresponding to the stream, a garbage collection policy corresponding to the stream; and sending the garbage collection policy corresponding to the stream to the solid-state drive.

A partition of the solid-state drive corresponding to the stream, that is, a same data partition of the solid-state drive, stores data of a same stream. In other words, data types of data stored in a same data partition are the same. The solid-state drive may support more than one stream, and the solid-state drive may include more than one data partition. If different streams are respectively used to transmit data of different data types, data partitions corresponding to the streams of the different data types are different, in other words, the data of the different data types is separately stored in different data partitions. Correspondingly, different data partitions store different data types, and different garbage collection policies are configured.

For example, the foregoing garbage collection is collectively performed based on a greedy algorithm, without considering that data may be updated and invalid. As a result, problems such as write amplification attributed to invalid migration are caused. Therefore, an idea of this application is to customize a corresponding garbage collection detection policy based on a data type, so that different types of data can be collected according to different corresponding garbage collection policies, fully considering that data may be updated and invalid. Therefore, problems such as write amplification attributed to invalid migration caused by collectively performing collection based on a greedy algorithm are resolved.

In this embodiment of this application, the storage controller obtains the data type corresponding to the stream supported by the solid-state drive. The storage controller may correspond to different data partitions based on streams of different data types, to subsequently write data in the stream to the corresponding data partition based on the data type corresponding to the stream. The storage controller determines, based on the data type corresponding to the stream, a garbage collection policy corresponding to the stream, and sends the garbage collection policy corresponding to the stream to the solid-state drive. In this way, the data partition corresponding to the stream is determined based on the stream, and a corresponding garbage collection policy is configured for the data partition corresponding to the stream based on the data type corresponding to the stream. During garbage collection, the solid-state drive may perform garbage collection according to a garbage collection policy corresponding to data of each stream (that is, a data partition corresponding to each stream). Therefore, invalid migration in the solid-state drive can be reduced, thereby reducing a quantity of times of write amplification in the solid-state drive, reducing a long-tail delay of the solid-state drive, optimizing performance of the solid-state drive, and increasing a service life of the solid-state drive.

In a possible implementation, when the solid-state drive supports two or more streams, the two or more streams correspond to different data types, and the two or more streams correspond to different garbage collection policies.

Different garbage collection policies are configured for streams that transmit different data types, in other words, different garbage collection policies are configured for data of different data types. This avoids that garbage collection is collectively performed based on a greedy algorithm without considering that data may be updated and invalid, which causes invalid migration and then results in problems such as write amplification.

In a possible implementation, the determining, based on the data type corresponding to the stream, a garbage collection policy corresponding to the stream includes: when the data type corresponding to the stream is periodically updated data, determining that the garbage collection policy corresponding to the stream is a first garbage collection policy, where the first garbage collection policy is skipping performing garbage collection on a first physical block, and setting dedicated reserved space, and the first physical block is used to store the periodically updated data; when the data type corresponding to the stream is data with a high update frequency, determining that the garbage collection policy corresponding to the stream is a second garbage collection policy, where the second garbage collection policy is performing garbage collection on a second physical block when a garbage amount of the second physical block reaches a preset high threshold, and the second physical block is used to store the data with the high update frequency; or when the data type corresponding to the stream is data with a low update frequency, determining that the garbage collection policy corresponding to the stream is a third garbage collection policy, where the third garbage collection policy is performing garbage collection on a third physical block in descending order of garbage amounts, and the third physical block is used to store the data with the low update frequency.

There may be a plurality of first physical blocks, a plurality of second physical blocks, and a plurality of third physical blocks. "A plurality of" refers to two or more. When there are a plurality of first physical blocks that stores the periodically updated data, the plurality of first physical blocks form a first data partition, and a garbage collection policy corresponding to the first data partition is a first garbage collection policy. When there are a plurality of second physical blocks that stores the data with the high update frequency, the plurality of second physical blocks form a second data partition, and a garbage collection policy corresponding to the second data partition is a second garbage collection policy. When there are a plurality of third physical blocks that stores the data with the low update frequency, the plurality of third physical blocks form a third data partition, and a garbage collection policy corresponding to the third data partition is a third garbage collection policy.

All the first physical blocks, all the second physical blocks, or all the third physical blocks included in the solid-state drive are used as a whole, and the garbage collection policy corresponds to the whole. For example, if the solid-state drive includes K second physical blocks, the K second physical blocks are used as a whole, and the whole corresponds to the second garbage collection policy. When a total garbage amount of the K second physical blocks reaches the preset high threshold, garbage collection is performed on the K second physical blocks. For another example, if the solid-state drive includes K third physical blocks, the K third physical blocks are used as a whole, and a garbage collection policy corresponding to the whole is the third garbage collection policy, the third garbage collection policy is executed on the K third physical blocks, garbage amounts of the K third physical blocks are separately obtained, and garbage collection is performed on the K third physical blocks in descending order of the garbage amounts.

In some other embodiments, the garbage collection policy may be individual-specific. For example, the solid-state drive includes K second physical blocks. When a garbage amount of a second physical block in the K second physical blocks reaches the preset high threshold, garbage collection is performed on the second physical block.

In this embodiment of this application, the garbage collection is not performed on the first physical block that stores the periodically updated data, and the periodically updated data is fixedly updated, in other words, all data in the first physical block is definitely invalid. After all the data in the first physical block is updated, and all the data in the first physical block becomes invalid data, the first physical block may be directly released, and the periodically updated data does not need to be migrated. In this way, data migration is greatly reduced, and for the periodically updated data, a quantity of times of write amplification in the solid-state drive is minimized, a long-tail delay of the solid-state drive is reduced, performance of the solid-state drive is further optimized, and a service life of the solid-state drive is increased.

Further, when the garbage amount of the second physical block reaches the preset high threshold, the garbage collection is set to be performed on the second physical block that stores the data with the high update frequency. Due to the data with the high update frequency, the garbage amount of the second physical block is easy to reach the high threshold. In addition, setting the high threshold can reduce a quantity of times of migrating the data with the high update frequency, reduce a quantity of times of write amplification, reduce a long-tail delay of the solid-state drive, optimize performance of the solid-state drive, and increase a service life of the solid-state drive.

Further, the garbage collection is set to be performed in descending order of the garbage amounts on the third physical block that stores the data with the low update frequency, so that it can be ensured that when the garbage collection is performed, a storage unit that can perform garbage collection definitely exists.

In a possible implementation, the obtaining a data type corresponding to a stream supported by a solid-state drive includes: obtaining a total quantity of streams supported by the solid-state drive; and creating the stream based on the total quantity, and setting the corresponding data type for the stream. The corresponding data type is set for the stream, so that corresponding garbage collection policies may be configured for data of different streams subsequently.

According to a second aspect, this application provides a storage controller. The storage controller includes a processor and a memory. The processor executes computer instructions in the memory, to obtain a data type corresponding to a stream supported by a solid-state drive, where the stream corresponds to a partition of the solid-state drive; determine, based on the data type corresponding to the stream, a garbage collection policy corresponding to the stream; and send the garbage collection policy corresponding to the stream to the solid-state drive.

In a possible implementation, when the solid-state drive supports two or more streams, the two or more streams correspond to different data types, and the two or more streams correspond to different garbage collection policies.

In a possible implementation, the determining, based on the data type corresponding to the stream, a garbage collection policy corresponding to the stream includes: when the data type corresponding to the stream is periodically updated data, determining that the garbage collection policy corresponding to the stream is a first garbage collection policy, where the first garbage collection policy is skipping performing garbage collection on a first physical block, and setting dedicated reserved space, and the first physical block is used to store the periodically updated data; when the data type corresponding to the stream is data with a high update frequency, determining that the garbage collection policy corresponding to the stream is a second garbage collection policy, where the second garbage collection policy is performing garbage collection on a second physical block when a garbage amount of the second physical block reaches a preset high threshold, and the second physical block is used to store the data with the high update frequency; or when the data type corresponding to the stream is data with a low update frequency, determining that the garbage collection policy corresponding to the stream is a third garbage collection policy, where the third garbage collection policy is performing garbage collection on a third physical block in descending order of garbage amounts, and the third physical block is used to store the data with the low update frequency.

In a possible implementation, the obtaining a data type corresponding to a stream supported by a solid-state drive includes: obtaining a total quantity of streams supported by the solid-state drive; and creating the stream based on the total quantity, and setting the corresponding data type for the stream.

According to a third aspect, this application provides a solid-state drive configuration method, applied to a solid-state drive, where the method includes: determining a data partition, where the data partition is used to store data of a corresponding data type; and configuring, based on the data type corresponding to the data partition, a garbage collection policy corresponding to the data partition.

In this embodiment of this application, data partitions used to store different data types are determined for the solid-state drive, and then a garbage collection policy corresponding to each data partition is configured based on a data type corresponding to each data partition. In other words, a corresponding garbage collection policy is customized based on a data type, so that different types of data can be collected according to different corresponding garbage collection policies, fully considering that data may be updated and invalid. Therefore, problems such as write amplification attributed to invalid migration caused by collectively performing collection based on a greedy algorithm are resolved.

In a possible implementation, when there are a total of two or more data partitions, the two or more data partitions correspond to different data types, and the two or more data partitions correspond to different garbage collection policies.

Different garbage collection policies are configured for data partitions that store different data types, in other words, different garbage collection policies are configured for data of different data types. This avoids that garbage collection is collectively performed based on a greedy algorithm without considering that data may be updated and invalid, which causes invalid migration and then results in problems such as write amplification.

In a possible implementation, the data partition includes one or more of a first data partition, a second data partition, and a third data partition. The first data partition is used to store periodically updated data, the second data partition is used to store data with a high update frequency, and the third data partition is used to store data with a low update frequency.

In a possible implementation, the configuring a garbage collection policy corresponding to the data partition includes: configuring a garbage collection policy corresponding to the first data partition as a first garbage collection policy, where the first garbage collection policy is skipping performing garbage collection on the first data partition, and setting dedicated reserved space; configuring a garbage collection policy corresponding to the second data partition as a second garbage collection policy, where the second garbage collection policy is performing garbage collection on the second data partition when a garbage amount of the second data partition reaches a preset high threshold; and configuring a garbage collection policy corresponding to the third data partition as a third garbage collection policy, where the third garbage collection policy is performing garbage collection on the third data partition in descending order of garbage amounts.

In this embodiment of this application, the garbage collection is not performed on the first physical block that stores the periodically updated data, and the periodically updated data is fixedly updated, in other words, all data in the first physical block is definitely invalid. After all the data in the first physical block is updated, and all the data in the first physical block becomes invalid data, the first physical block may be directly released, and the periodically updated data does not need to be migrated. In this way, data migration is greatly reduced, and for the periodically updated data, a quantity of times of write amplification in the solid-state drive is minimized, a long-tail delay of the solid-state drive is reduced, performance of the solid-state drive is further optimized, and a service life of the solid-state drive is increased.

Further, when the garbage amount of the second physical block reaches the preset high threshold, the garbage collection is set to be performed on the second physical block that stores the data with the high update frequency. Due to the data with the high update frequency, the garbage amount of the second physical block is easy to reach the high threshold. In addition, setting the high threshold can reduce a quantity of times of migrating the data with the high update frequency, reduce a quantity of times of write amplification, reduce a long-tail delay of the solid-state drive, optimize performance of the solid-state drive, and increase a service life of the solid-state drive.

Further, the garbage collection is set to be performed in descending order of the garbage amounts on the third physical block that stores the data with the low update frequency, so that it can be ensured that when the garbage collection is performed, a storage unit that can perform garbage collection definitely exists.

In a possible implementation, the determining a data partition includes: obtaining a total quantity of streams supported by the solid-state drive; and determining N data partitions based on the total quantity, where N is less than or equal to the total quantity.

In a possible implementation, the data partition includes one or more physical blocks.

According to a fourth aspect, this application provides a solid-state drive. The solid-state drive includes a flash memory controller and a flash memory chip. The flash memory controller is adapted to determine a data partition from the flash memory chip, where the data partition is used to store data of a corresponding data type. The flash memory controller is further adapted to configure, based on the data type corresponding to the data partition, a garbage collection policy corresponding to the data partition.

In a possible implementation, when there are a total of two or more data partitions, the two or more data partitions correspond to different data types, and the two or more data partitions correspond to different garbage collection policies.

In a possible implementation, the data partition includes one or more of a first data partition, a second data partition, and a third data partition. The first data partition is used to store periodically updated data, the second data partition is used to store data with a high update frequency, and the third data partition is used to store data with a low update frequency.

In a possible implementation, the configuring a garbage collection policy corresponding to the data partition includes: The flash memory controller configures a garbage collection policy corresponding to the first data partition as a first garbage collection policy, where the first garbage collection policy is skipping performing garbage collection on the first data partition, and setting dedicated reserved space. The flash memory controller configures a garbage collection policy corresponding to the second data partition as a second garbage collection policy, where the second garbage collection policy is performing garbage collection on the second data partition when a garbage amount of the second data partition reaches a preset high threshold. The flash memory controller configures a garbage collection policy corresponding to the third data partition as a third garbage collection policy, where the third garbage collection policy is performing garbage collection on the third data partition in descending order of garbage amounts.

In a possible implementation, that the flash memory controller is adapted to determine a data partition from the flash memory chip includes: The flash memory controller is adapted to: obtain a total quantity of streams supported by the solid-state drive, and determine N data partitions based on the total quantity, where N is less than or equal to the total quantity.

In a possible implementation, the data partition includes one or more physical blocks.

According to a fifth aspect, this application provides a data writing method, applied to a flash memory storage system. The flash memory storage system includes a storage controller and a solid-state drive, the solid-state drive includes a data partition, a corresponding garbage collection policy is configured for the data partition, and the garbage collection policy is configured based on a data type corresponding to the data partition. The storage controller obtains to-be-written data. The storage controller determines a stream ID based on a data type of the to-be-written data. The storage controller places the to-be-written data in a stream corresponding to the stream ID, and sends the stream to the solid-state drive. The solid-state drive writes the to-be-written data in the stream into a corresponding data partition, where a data type corresponding to the data partition is the same as the data type of the to-be-written data.

In this embodiment of this application, the solid-state drive has obtained a data partition through division, and different garbage collection policies are configured for storing data partitions of different data types. The storage controller writes data of different streams into corresponding data partitions, specifically writes, based on a data type transmitted by the stream, data in the stream into a data partition that is of a same data type as that is transmitted by the stream. During garbage collection, the solid-state drive may perform garbage collection according to a garbage collection policy corresponding to each data partition. Therefore, invalid migration in the solid-state drive can be reduced, thereby reducing a quantity of times of write amplification in the solid-state drive, reducing a long-tail delay of the solid-state drive, optimizing performance of the solid-state drive, and increasing a service life of the solid-state drive.

In a possible implementation, the data partition includes one or more of a first data partition, a second data partition, and a third data partition. When the to-be-written data is periodically updated data, the storage controller determines that the stream ID is a first ID, places the to-be-written data a first stream corresponding to the first ID, and sends the first stream to the solid-state drive, and that the solid-state drive writes the to-be-written data in the stream into a corresponding data partition includes: The solid-state drive writes to-be-written data in the first stream into a first data partition, where the first data partition is associated with the first stream, a garbage collection policy corresponding to the first data partition is a first garbage collection policy, and the first garbage collection policy is skipping performing garbage collection on the first data partition, and setting dedicated reserved space. When the to-be-written data is data with a high update frequency, the storage controller determines that the stream ID is a second ID, places the to-be-written data into a second stream corresponding to the second ID, and sends the second stream to the solid-state drive, and that the solid-state drive writes the to-be-written data in the stream into a corresponding data partition includes: The solid-state drive writes to-be-written data in the second stream into a second data partition, where the second data partition is associated with the second stream, a garbage collection policy corresponding to the second data partition is a second garbage collection policy, and the second garbage collection policy is performing garbage collection on the second data partition when a garbage amount of the second data partition reaches a preset high threshold. When the to-be-written data is data with a low update frequency, the storage controller determines that the stream ID is a third ID, places the to-be-written data into a third stream corresponding to the third ID, and sends the third stream to the solid-state drive, and that the solid-state drive writes the to-be-written data in the stream into a corresponding data partition includes: The solid-state drive writes to-be-written data in a third stream into a third data partition, where the third data partition is associated with the third stream, a garbage collection policy corresponding to the third data partition is a third garbage collection policy, and the third garbage collection policy is performing garbage collection on the third data partition in descending order of garbage amounts.

The first data partition is associated with the first stream, in other words, the first data partition is used to store data whose type is the same as a data type transmitted by the first stream. In other words, the data type stored in the first data partition is the same as the data type transmitted by the first stream. Correspondingly, the second data partition is associated with the second stream, in other words, a data type stored in the second data partition is the same as a data type transmitted by the second stream. The third data partition is associated with the third stream, in other words, a data type stored in the third data partition is the same as a data type transmitted by the third stream.

According to a sixth aspect, this application provides a garbage collection method, applied to a solid-state drive. The solid-state drive includes a data partition, a corresponding garbage collection policy is configured for the data partition, and the garbage collection policy is configured based on a data type corresponding to the data partition. The garbage collection method includes: performing garbage collection on the data partition according to the garbage collection policy corresponding to the data partition.

In this embodiment of this application, data partitions used to store different data types are obtained through division, and then a corresponding garbage collection policy is configured based on a data type used for storage in each data partition. Subsequently, garbage collection is performed on the data partition according to the garbage collection policy corresponding to the data partition. Therefore, invalid migration in the solid-state drive can be reduced, thereby reducing a quantity of times of write amplification in the solid-state drive, reducing a long-tail delay of the solid-state drive, optimizing performance of the solid-state drive, and increasing a service life of the solid-state drive.

In a possible implementation, the data partition includes one or more of a first data partition, a second data partition, and a third data partition. The first data partition is used to store periodically updated data, a garbage collection policy corresponding to the first data partition is a first garbage collection policy, and the first garbage collection policy is skipping performing garbage collection on the first data partition, and setting dedicated reserved space. The second data partition is used to store data with a high update frequency, a garbage collection policy corresponding to the second data partition is a second garbage collection policy, and the second garbage collection policy is performing garbage collection on the second data partition when a garbage amount in the second data partition reaches a preset high threshold. The third data partition is used to store data with a low update frequency, a garbage collection policy corresponding to the third data partition is a third garbage collection policy, and the third garbage collection policy is performing garbage collection on the third data partition in descending order of garbage amounts.

In a possible implementation, when the solid-state drive includes two or three of the first data partition, the second data partition, and the third data partition, the method further includes: performing garbage collection on the data partition in descending order of priorities, where a priority of the first data partition is higher than a priority of the second data partition, and the priority of the second data partition is higher than a priority of the third data partition.

In this embodiment of this application, when garbage collection is performed, the first garbage collection policy is first executed on the first data partition, and if the garbage collection further needs to be performed, the second garbage collection policy continues to be executed on the second data partition. Otherwise, the garbage collection ends. If the garbage collection further needs to be continued, the third garbage collection policy continues to be executed on the third data partition. After the first physical block in the first data partition is released, if a collection resource has satisfied a requirement of this garbage collection task, the garbage collection ends. When collecting the resource, the solid-state drive does not migrate data in the first data partition. This can reduce a quantity of migration times, reduce a quantity of times of write amplification in the solid-state drive, reduce a long-tail delay of the solid-state drive, optimize performance of the solid-state drive, and increase a service life of the solid-state drive. If the collection resource does not satisfy the requirement of this garbage collection task after the first physical block in the first data partition is released, the garbage collection continues to be performed on the second physical block in the second data partition according to the second garbage collection policy. When collecting the resource, the solid-state drive collects, according to the second garbage collection policy, the second physical block whose garbage amount reaches the preset high threshold. This can reduce a quantity of data migration times, reduce a quantity of times of write amplification in the solid-state drive, reduce a long-tail delay of the solid-state drive, optimize performance of the solid-state drive, and increase a service life of the solid-state drive.

According to a seventh aspect, this application provides a flash memory array, including M solid-state drives and the storage controller according to any one of the foregoing implementations. The storage controller communicates with the M solid-state drives, M is an integer greater than or equal to 1, and the solid-state drive includes a data partition.

According to an eighth aspect, this application provides a flash memory array, including a storage controller and M solid-state drives according to any one of the foregoing implementations. The storage controller communicates with the M solid-state drives, and M is an integer greater than or equal to 1.

According to a ninth aspect, this application provides an electronic device, including a host and a flash memory storage system. The host communicates with the flash memory storage system, and the flash memory storage system performs the data writing method according to any one of the foregoing implementations.

According to a tenth aspect, this application provides a computer storage medium, including computer instructions. When the computer instructions are run on an electronic device, the electronic device is enabled to perform any one of the foregoing solid-state drive configuration methods, or any one of the foregoing solid-state drive configuration methods, or any one of the foregoing garbage collection methods.

According to an eleventh aspect, this application provides a computer program product. When the computer program product runs on a computer, the computer is enabled to perform any one of the foregoing solid-state drive configuration methods, or any one of the foregoing solid-state drive configuration methods, or any one of the foregoing garbage collection methods.

Technical effects obtained in the second aspect are similar to technical effects obtained by using a corresponding technical means in the first aspect. Technical effects obtained in the fourth aspect are similar to technical effects obtained by using a corresponding technical means in the third aspect. Technical effects obtained in the fifth aspect, the sixth aspect, the seventh aspect, the eighth aspect, the ninth aspect, and the tenth aspect are similar to technical effects obtained by using a corresponding technical means in the first aspect. Details are not described herein again.

The technical solutions provided in this application bring at least the following beneficial effects.

A corresponding garbage collection policy is customized based on a data type, so that different types of data can be collected according to different corresponding garbage collection policies, fully considering that data may be updated and invalid. Therefore, problems such as write amplification attributed to invalid migration caused by collectively performing collection based on a greedy algorithm are resolved.

### BRIEF DESCRIPTION OF DRAWINGS

FIG. 1 is a diagram of a data writing method according to this application;
FIG. 2 is a diagram of a structure of a flash memory storage system according to this application;
FIG. 3 is a diagram of a structure of a storage controller according to this application;
FIG. 4 is a diagram of a structure of a solid-state drive according to this application;
FIG. 5 is a schematic flowchart of a solid-state drive configuration method according to this application;
FIG. 6 is a diagram in which a storage controller cooperates with a solid-state drive to set a data type and a corresponding garbage collection policy according to this application; and
FIG. 7 is a schematic flowchart of a data writing method according to this application.

### DESCRIPTION OF EMBODIMENTS

"A plurality of" in this application means two or more. In addition, it should be understood that in descriptions of this application, terms such as "first" and "second" are merely used for distinguishing and description, but should not be understood as indicating or implying relative importance, or should not be understood as indicating or implying a sequence.

"A plurality of" in this application means two or more. In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner.

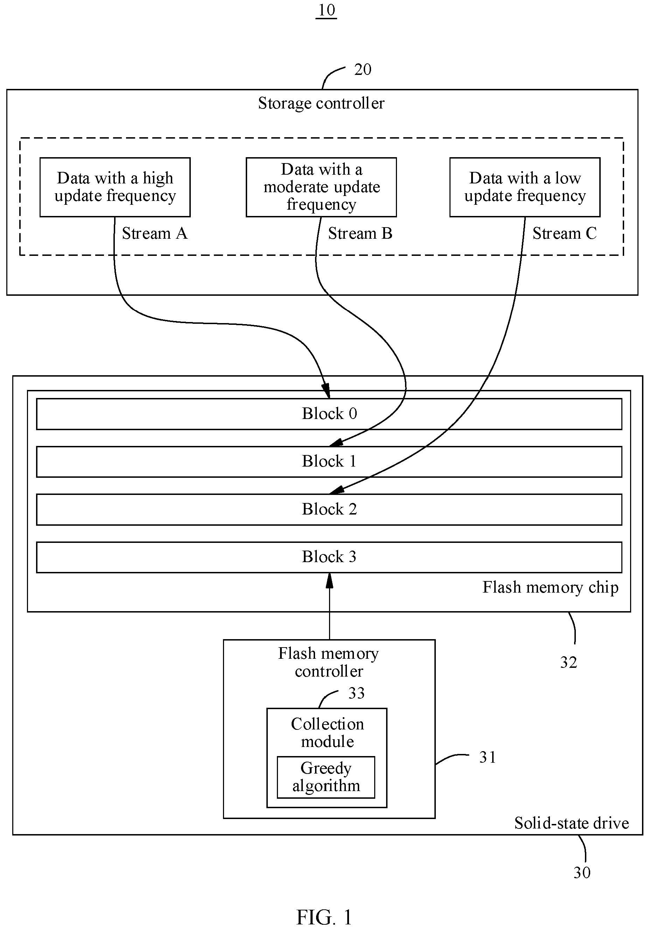

FIG. 1 shows an example of a data writing method according to an embodiment of this application.

As shown in FIG. 1, a storage system 10 includes a storage controller 20 and a solid-state drive 30. The solid-state drive 30 includes a flash memory controller 31 and a flash memory chip 32. The flash memory chip 32 includes a plurality of physical blocks (for example, a Block 0, a Block 1, a Block 2, and a Block 3). The flash memory controller 31 includes a collection module 33. The collection module 33 is adapted to perform a garbage collection operation.

Data is transmitted between the storage controller 20 and the solid-state drive 30 according to a multi-stream protocol. The solid-state drive 30 provides a multi-stream interface (not shown in the figure) that supports multi-streaming, and the storage controller 20 writes, based on a multi-stream (Multi-Stream, MS) technology, data transmitted by the storage controller 20 to the solid-state drive 30. The multi-stream technology is a technology of in a multi-stream manner, different types of data to different physical blocks of the solid-state drive 30 through the multi-stream interface.

The storage controller 20 or a host side may write data with different update frequencies into different data streams through the multi-stream interface based on the data update frequencies. As shown in FIG. 1, data with a high update frequency is written into a stream A, data with a moderate update frequency is written into a stream B, and data with a low update frequency is written into a stream C. The data in the stream A is written into the Block 0 of the flash memory chip 32, the data in the stream B is written into the Block 1 of the flash memory chip 32, and the data in the stream C is written into the Block 2 of the flash memory chip 32, to implement a function of writing data into different physical blocks in the solid-state drive 30.

Definitions or division of the data with the high update frequency, the data with the moderate update frequency, and the data with the low update frequency may be determined based on an actual situation. This is not specifically limited in this application.

The "stream" may indicate that different data is associated with each other or has a similar life. In other words, a group of individually written data may be a part of a collective stream, and each stream may be identified by a stream ID, and the stream ID is globally unique. Data with similar features or attributes may be allocated with a same unique stream ID, and data with different features or attributes is allocated with different stream IDs. Data of a same stream ID may be written into a same physical block of the solid-state drive 30.

The data with different update frequencies is written into different physical blocks of the solid-state drive 30 based on the multi-stream technology, so that a quantity of times of write amplification and P/E cycles of the solid-state drive 30 can be reduced, and a service life and performance of the solid-state drive 30 can be improved. However, during implementation of this embodiment of this application, the inventor finds that when performing garbage collection, the collection module 33 of the solid-state drive 30 uniformly checks garbage amounts of all physical blocks, and collectively performs garbage collection based on a greedy algorithm. As a result, there is invalid migration in the solid-state drive 30 For example, the solid-state drive 30 selects to perform garbage collection on the physical block Block 1, and migrates valid data such as data A on the Block 1 to the new physical block Block 2. After the data A is migrated to the new physical block Block 2, the storage controller 20 updates the data A, and the data A is invalid. Consequently, invalid migration in the solid-state drive 30 is caused, and finally problems such as write amplification and a long-tail delay of the solid-state drive 30 are caused. As a result, performance of the solid-state drive 30 is reduced, and a service life of the solid-state drive 30 is affected.

In view of this, embodiments of this application provide a solid-state drive configuration method, a data writing method, a garbage collection method, a flash memory storage system, a storage controller, and a solid-state drive. A basic principle of this application is to set a correspondence between a data type and a garbage collection policy. Corresponding garbage collection policies are set for data of different data types. For example, a corresponding garbage collection policy is set for data based on a data type of the data to reduce invalid migration (a periodicity and a frequency of a data update are fully considered, in other words, data invalidation is considered). Different data types correspond to different garbage collection policies. During garbage collection, the solid-state drive may perform garbage collection according to a garbage collection policy corresponding to each piece of data. Therefore, invalid migration in the solid-state drive can be reduced, thereby reducing a quantity of times of write amplification in the solid-state drive, reducing a long-tail delay of the solid-state drive, optimizing performance of the solid-state drive, and increasing a service life of the solid-state drive.

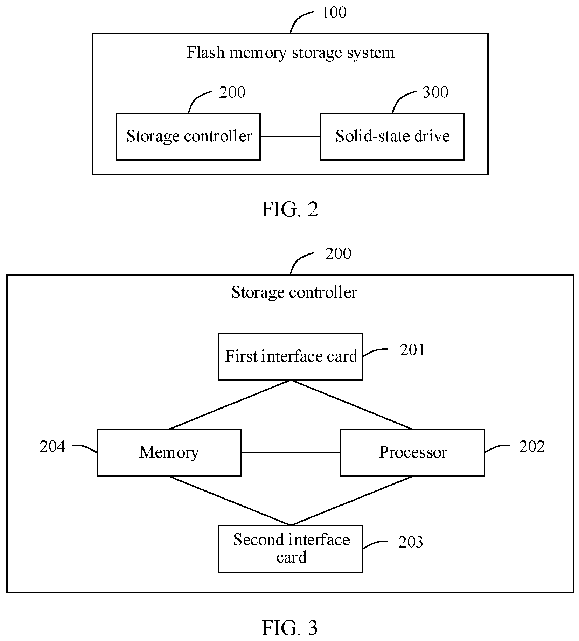

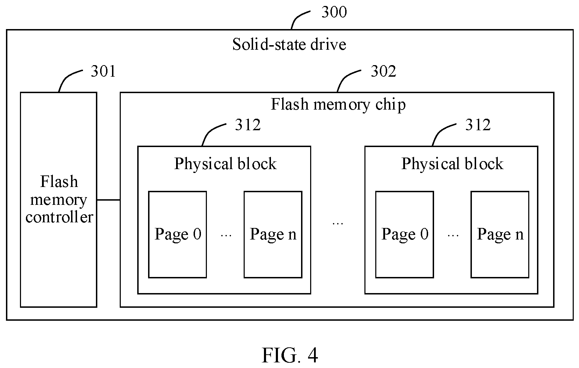

The flash memory storage system 100 (as shown in FIG. 2), the storage controller 200 (as shown in FIG. 3), or the flash memory controller 301 (as shown in FIG. 4) in embodiments of this application may set the correspondence between the data type and the garbage collection policy. The data type may be determined based on an update of the data to reduce invalid migration. That the data type may be determined based on an update of the data may be, for example, classifying the data into periodically updated data and aperiodically updated data based on the periodicity of the data update; or classifying the data into data with a high update frequency and data with a low update frequency based on the frequency of the data update.

The periodically updated data means that the data is periodically updated. In other words, the periodically updated data is updated according to a fixed update rule of the periodically updated data, and it may be determined, according to the update rule of the periodically updated data, that the periodically updated data is definitely updated. For example, the periodically updated data has a stable periodicity T, and when the periodicity T arrives, the data is definitely updated. The periodically updated data may be, for example, log data.

For the periodically updated data, a subject that triggers the update of the data may be an electronic device that stores the data, or may be a user. For example, the user periodically updates data (for example, a file created by the user) based on a habit of the user. In some embodiments, historical data of the user may be analyzed to obtain a data update rule, and it is detected that the data update has a specific update rule (for example, there is a fixed update periodicity), so as to determine that a data type of the historical data is the periodically updated data.

The aperiodically updated data means that the data is not updated regularly. For example, an update periodicity of the data is not fixed or unstable, and it cannot be determined that the data is definitely updated.

In this embodiment of this application, the aperiodically updated data may be further classified into data with a high update frequency and data with a low update frequency based on an update frequency of the data. In some embodiments, data with a moderate update frequency may be further obtained through division. The data with the high update frequency includes hot data, and the data with the low update frequency includes any one of or a combination of all data categories of warm data or cold data. In some other embodiments, the data with the high update frequency includes any one or a combination of all data categories of hot data and warm data, and the data with the low update frequency includes cold data.

In some embodiments, a data category may be determined based on an access characteristic of data. The access characteristic may be a quantity of data access times, a data reuse distance, a data access frequency, or a comprehensive characteristic of the quantity of data access times and the reuse distance. The quantity of access times is a quantity of times that to-be-written data is accessed. The reuse distance is an amount of data between two accesses of the data. In other words, if one piece of data is accessed, and an operating system accesses the data again after accessing seven pieces of data, the reuse distance of the data is seven. Alternatively, the access characteristic may be a quantity of times that data is read or written, or the like. Specifically, the access characteristic may be set based on an actual situation.

An example in which the access characteristic is the quantity of access times is used to determine the data category. As shown in Table 1, data whose quantity of access times (N) is greater than or equal to 15 may be defined as hot data, data whose quantity of access times is less than 15 and greater than or equal to 5 may be defined as warm data, and data whose quantity of access times is less than 5 may be defined as cold data.

**Table 1 Data category determined based on a quantity of access times**

| Access characteristic | Data category |
|---|---|
| N is greater than or equal to 20 | Hot data |
| N is greater than 5 and less than 20 | Warm data |
| N is greater than 0 and less than or equal to 5 | Cold data |

In some embodiments, the data with the high update frequency may further include metadata. The metadata may be a mapping relationship, a first input first output (First Input First Output, FIFO) bidirectional linked list corresponding to a write operation, or the like.

The foregoing classification and definition of the data type or the data category are merely examples for description, and are not limited thereto in actual application. For example, data may be classified based on different sources of the data. For example, based on different applications, data update frequencies or update periodicities of the applications are different, and data from different applications is classified based on the different applications.

In this embodiment of this application, refer to Table 2, the flash memory storage system 100, the storage controller 200, or the flash memory controller 301 may set a corresponding garbage collection policy for data of each data type by fully considering a periodicity and a frequency of a data update (in other words, considering data invalidation) to reduce invalid migration.

For example, the flash memory storage system 100, the storage controller 200, or the flash memory controller 301 customizes a first garbage collection policy for the periodically updated data, where the first garbage collection policy is skipping performing garbage collection, and setting dedicated reserved space for the periodically updated data. Skipping performing garbage collection on a first physical block that stores the periodically updated data means that when the garbage collection is performed on the solid-state drive 300 (as shown in FIG. 2), valid data on the first physical block that stores the periodically updated data is not migrated, but the first physical block is directly released after all data on the first physical block is set to be invalid. When the periodically updated data is updated, the dedicated reserved space is used to store updated periodically updated data.

The flash memory storage system 100, the storage controller 200, or the flash memory controller 301 customizes a second garbage collection policy for the data with the high update frequency, where the second garbage collection policy is performing garbage collection when a garbage amount reaches a preset high threshold. When garbage collection is performed on a second physical block that stores the data with the high update frequency, if it is detected that a garbage amount of the second physical block reaches the preset high threshold, the garbage collection is performed on the second physical block; otherwise, the garbage collection is not performed on the second physical block. A range of the preset high threshold may be 60% to 100%. This is not specifically limited in this application.

The flash memory storage system 100, the storage controller 200, or the flash memory controller 301 customizes a third garbage collection policy for the data with the low update frequency, where the third garbage collection policy is performing garbage collection in descending order of garbage amounts. When garbage collection is performed on a third physical block that stores the data with the low update frequency, the garbage collection is performed in descending order of garbage amounts of the third physical block until a storage unit that performs collection satisfies a requirement of this garbage collection task.

There may be one or more first physical blocks, second physical blocks, and third physical blocks. A quantity of first physical blocks, a quantity of second physical blocks, and a quantity of third physical blocks are not specifically limited in embodiments of this application.

When there are two or more first physical blocks, second physical blocks, and third physical blocks, the two or more first physical blocks form a first data partition, and the first data partition corresponds to the first garbage collection policy. The two or more second physical blocks form a second data partition, and the second data partition corresponds to the second garbage collection policy. The two or more third physical blocks form a third data partition, and the third data partition corresponds to the third garbage collection policy.

The solid-state drive 300 or a flash memory chip 302 (as shown in FIG. 4) to which the first physical block, the second physical block, and the third physical block belong is not specifically limited in embodiments of this application. To be specific, when the flash memory storage system 100 includes a plurality of solid-state drives 300, two or three of the first physical block, the second physical block, and the third physical block may all come from a same solid-state drive 300, or may come from different solid-state drives 300. When the solid-state drive 300 includes a plurality of flash memory chips 302, two or three of the first physical block, the second physical block, and the third physical block may all come from a same flash memory chip 302, or may all come from different flash memory chips 302.

Preferably, there are two or more third physical blocks.

**Table 2 Corresponding garbage collection policy set based on a data type**

| Data type | Garbage collection policy |
|---|---|
| Periodically updated data | First garbage collection policy: No garbage collection is performed, and dedicated reserved space is set |
| Data with a high update frequency | Second garbage collection policy: Garbage collection is performed when a garbage amount reaches a preset high threshold |
| Data with a low update frequency | Third garbage collection policy: Garbage collection is performed in descending order of garbage amounts |

In this embodiment of this application, the flash memory storage system 100, the storage controller 200, or the flash memory controller 301 sets corresponding garbage collection policies for data of different data types. Data of different data types corresponds to different garbage collection policies. A periodicity and a frequency of a data update are fully considered, in other words, data invalidation is considered. This avoids invalid migration caused by collectively performing garbage collection based on the greedy algorithm shown in FIG. 1.

Further, the garbage collection is not performed on the first physical block that stores the periodically updated data, and the periodically updated data is fixedly updated, in other words, all data in the first physical block is definitely invalid. After all the data in the first physical block is updated, and all the data in the first physical block becomes invalid data, the first physical block may be directly released, and the periodically updated data does not need to be migrated. In this way, data migration is greatly reduced, and for the periodically updated data, a quantity of times of write amplification in the solid-state drive is minimized, a long-tail delay of the solid-state drive is reduced, performance of the solid-state drive is further optimized, and a service life of the solid-state drive is increased.

Further, when the garbage amount of the second physical block reaches the preset high threshold, the garbage collection is set to be performed on the second physical block that stores the data with the high update frequency. Due to the data with the high update frequency, the garbage amount of the second physical block is easy to reach the high threshold. In addition, setting the high threshold can reduce a quantity of times of migrating the data with the high update frequency, reduce a quantity of times of write amplification, reduce a long-tail delay of the solid-state drive, optimize performance of the solid-state drive, and increase a service life of the solid-state drive.

Further, the garbage collection is set to be performed in descending order of the garbage amounts on the third physical block that stores the data with the low update frequency, so that it can be ensured that when the garbage collection is performed, a storage unit that can perform garbage collection definitely exists.

FIG. 2 shows an example of a structure of a flash memory storage system 100 according to an embodiment of this application.

As shown in FIG. 2, the flash memory storage system 100 includes a storage controller 200 and a solid-state drive 300. Data may be transmitted between the storage controller 200 and the solid-state drive 300 according to a multi-stream protocol.

The storage controller 200 may be a computing device, for example, a server or a desktop computer. The storage controller 200 is connected to a host (not shown in the figure) over a storage area network (storage area network, SAN). The storage controller 200 may receive an input/output (I/O) request from the host.

The solid-state drive 300 is a memory that uses a flash memory chip 302 (as shown in FIG. 4) as a storage medium.

In FIG. 2, an example in which there is one storage controller 200 and one solid-state drive 300 is merely used for description. In actual application, the flash memory storage system 100 may include two or more storage controllers 200, and physical structures and functions of the storage controllers 200 are similar. The flash memory storage system 100 may include two or more solid-state drives 300, and physical structures and functions of the solid-state drives 300 are similar.

A connection relationship between the storage controller 200 and the solid-state drive 300 in FIG. 2 is merely an example for description. In actual application, one storage controller 200 may be connected to two or more solid-state drives 300, in other words, the storage controller 200 may communicate with the two or more solid-state drives 300. A connection manner between the storage controllers 200 and a connection manner between any one of the storage controllers 200 and the solid-state drive 300 are not limited in this embodiment of this application, provided that the storage controllers 200 can communicate with each other and each storage controller 200 and the solid-state drive 300 can communicate with each other.

FIG. 3 shows an example of a structure of a storage controller 200 according to an embodiment of this application.

As shown in FIG. 3, the storage controller 200 includes a first interface card 201, a processor 202, and a second interface card 203. The processor 202 is connected to the first interface card 201 and the second interface card 203.

The first interface card 201 is adapted to communicate with a host, and the storage controller 200 may receive an I/O request of the host via the first interface card 201. The processor 202 may be a central processing unit (central processing unit, CPU). The processor 202 may be adapted to receive the I/O request from the host, and process the I/O request. The I/O request may be a data write request or a data read request, and the processor 202 may further send data in the data write request to the solid-state drive 300. The processor 202 may further output a configuration instruction, where the configuration instruction includes a data type and a garbage collection policy set based on the data type. The second interface card 203 is adapted to communicate with the solid-state drive 300. The storage controller 200 may send the data write request (including data and the configuration instruction) to the solid-state drive 300 via the second interface card 203, so that the solid-state drive 300 stores the data, or performs corresponding configuration based on the configuration instruction, and stores a correspondence between the data type and the garbage collection policy.

Optionally, the storage controller 200 may further include a memory 204. The memory 204 is adapted to temporarily store data received from the host or data read from the solid-state drive 300. When receiving a plurality of data write requests sent by the host, the storage controller 200 may temporarily store data in the plurality of data write requests in the memory 204. When a capacity of the memory 204 reaches a specific threshold, the data stored in the memory 204 and a logical address allocated for the data are sent to the solid-state drive 300. The solid-state drive 300 stores the data. The memory 204 includes a volatile memory, a flash memory chip, or a combination thereof. The volatile memory is, for example, a random access memory (random access memory, RAM). The flash memory chip is any machine-readable medium that can store program code, for example, a floppy disk, a hard disk, a solid-state drive, or an optical disc.

FIG. 4 shows an example of a structure of a solid-state drive 300 according to an embodiment of this application.

As shown in FIG. 4, the solid-state drive 300 includes a flash memory controller 301 and a flash memory chip 302.

The flash memory controller 301 is adapted to perform an operation like a data write request or a data read request sent by the storage controller 200.

The flash memory controller 301 includes a flash translation layer (flash translation layer, FTL) (not shown in the figure). The flash translation layer is adapted to store a correspondence between a logical address (Logical Block Address, LBA) of data and a physical address (Physical Block Address, PBA) in the solid-state drive 300, and perform a data read or write operation based on the correspondence between the logical address and the physical address. The flash translation layer is adapted to convert a logical address in the data write request or the data read request sent by the storage controller 200 into a physical address of data in the solid-state drive 300. The logical address of the data is a subset, which is allocated by the storage controller 200, of a logical address range of a segment. The logical address of the data includes a start logical address and a length. The start logical address indicates a location at which the data is located in the segment, and the length indicates a size of the data.

The solid-state drive 300 usually includes several flash memory chips 302. Each flash memory chip 302 includes several physical blocks 312, and each physical block 312 includes several pages (for example, a page 0 to a page n), where there may be one or more pages. The page is the smallest data read/write unit in the solid-state drive, and a size of the page may be 4 KB, 8 KB, or 16 KB. Pages are combined into the physical blocks 312, and each physical block 312 may have 32, 64, or 128 pages.

Generally, the flash memory chip 302 is divided into data space and reserved space (Over-Provisioning, OP). The data space is space to which data is already written, and the reserved space is free space, includes free pages, and data may be written to the reserved space. When new data needs to overwrite data that has been stored in the data space in the flash memory chip 302, a redirect-on-write mechanism is used. In other words, when the solid-state drive 300 writes new data to a logical block address to modify the stored data, the solid-state drive 300 writes the new data to a page of the reserved space, establishes a mapping relationship between the LBA and a page address of the reserved space, and marks data in a page address that is of the data space and that is originally mapped to the LBA as garbage data. After the reserved space is less than a specific threshold, the solid-state drive 300 performs garbage collection on a physical block 312 including the page in which the garbage data is located. A collection process is as follows: reading valid data in the physical block 312 including the page in which the garbage data is located, writing the read valid data to the reserved space, erasing data in the physical block 312 including the page in which the garbage data is located, and using the physical block 312 as new reserved space. In the garbage collection process, a process in which the valid data is read and the valid data is written to the reserved space is referred to as valid data migration. Garbage collection causes write amplification, and a ratio of a sum of a size V of the valid data migrated in garbage collection in the solid-state drive 300 and a size W of the newly written data to the size W of the newly written data, that is, (V+W)/W, is referred to as write amplification.

In this embodiment of this application, a first physical block of the solid-state drive 300 is used to store periodically updated data, a second physical block is used to store data with a high update frequency, and a third physical block is used to store data with a low update frequency. When performing garbage collection, the solid-state drive 300 executes a first garbage collection policy on the first physical block, executes a second garbage collection policy on the second physical block, and executes a third garbage collection policy on the third physical block.

There may be one or more first physical blocks, second physical blocks, and third physical blocks. A quantity of first physical blocks, a quantity of second physical blocks, and a quantity of third physical blocks are not specifically limited in embodiments of this application.

Preferably, there are two or more third physical blocks.

When there are two or more first physical blocks, second physical blocks, and third physical blocks, the two or more first physical blocks form a first data partition, and the first data partition corresponds to the first garbage collection policy. The two or more second physical blocks form a second data partition, and the second data partition corresponds to the second garbage collection policy. The two or more third physical blocks form a third data partition, and the third data partition corresponds to the third garbage collection policy.

The flash memory chip 301 or the solid-state drive 300 to which the first physical block, the second physical block, and the third physical block belong is not specifically limited in embodiments of this application. When the solid-state drive 300 includes a plurality of flash memory chips 301, two or three of the first physical block, the second physical block, and the third physical block may all come from a same flash memory chip 301, or may all come from different flash memory chips 301. When the flash memory storage system 100 includes a plurality of solid-state drives 300, two or three of the first physical block, the second physical block, and the third physical block may all come from a same solid-state drive 300, or may come from different solid-state drives 300.

In this embodiment of this application, when two or three of the first physical block, the second physical block, and the third physical block are from different solid-state drives 300, in other words, the storage controller 200 may send different configuration instructions to different solid-state drives 300, or perform different configurations on different solid-state drives 300 in advance, so that each solid-state drive 300 stores a data type and a corresponding garbage collection policy. For example, if a solid-state drive 300A (not shown in the figure) is set to store only periodic data, the storage controller 200 sends the periodic data and the first garbage collection policy to the solid-state drive 300A, or the solid-state drive 300A stores a correspondence between the periodic data and the first garbage collection policy. Correspondingly, if a solid-state drive 300B (not shown in the figure) is set to store only data with a high update frequency, the storage controller 200 sends the data with the high update frequency and the second garbage collection policy to the solid-state drive 300B, and the solid-state drive 300B stores a correspondence between the data with the high update frequency and the second garbage collection policy. When performing garbage collection, the solid-state drive 300A executes the first garbage collection policy, in other words, does not perform garbage collection on a physical block 312 in the solid-state drive 300A. The solid-state drive 300B performs garbage collection on a physical block 312 in the solid-state drive 300B according to the second garbage collection policy.

The following uses an example in which a corresponding garbage collection policy is set for each data partition to describe in detail a solid-state drive 300 configuration method and a data writing method in this embodiment of this application. The configuration method and the data writing method may be applied to the flash memory storage system 100 shown in FIG. 2, and may be executed by the storage controller 200 shown in FIG. 3.

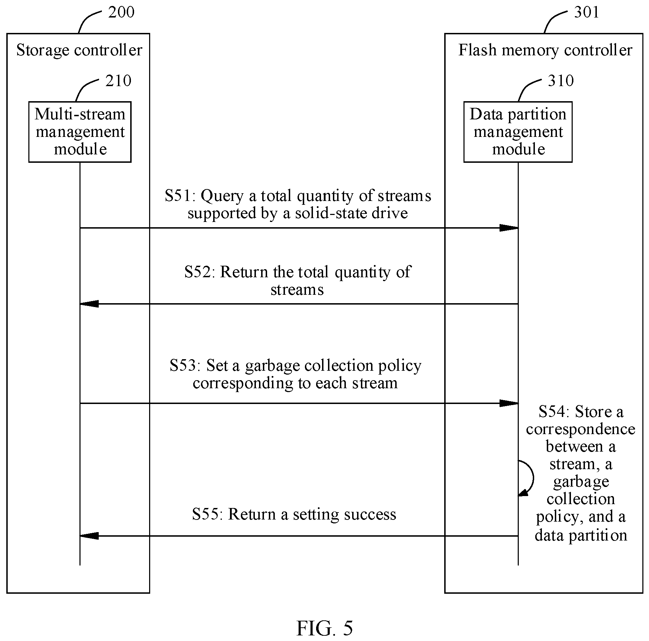

FIG. 5 shows an example of a procedure of a solid-state drive configuration method according to an embodiment of this application.

As shown in FIG. 5, a storage controller 200 includes a multi-stream management module 210. The multi-stream management module 210 is adapted to manage a plurality of streams, and set a corresponding garbage collection policy for each stream based on a data type transmitted by using each stream. A flash memory controller 301 includes a data partition management module 310. The data partition management module 310 is adapted to allocate a corresponding data partition to each stream, and store a relationship between the stream, the garbage collection policy, and the data partition.

Step S51: The multi-stream management module 210 queries the data partition management module 310 for a total quantity of streams supported by a solid-state drive 300.

When the flash memory storage system 100 shown in FIG. 2 is started, the multi-stream management module 210 on the storage controller 200 queries the data partition management module 310 for the total quantity of streams supported by the solid-state drive 300.

It may be understood that the solid-state drive 300 may support one or more streams.

Step S52: The data partition management module 310 returns the total quantity of streams supported by the solid-state drive 300 to the multi-stream management module 210.

In this embodiment of this application, the multi-stream management module 210 may be adapted to: create a stream based on the total quantity of streams supported by the solid-state drive 300, and allocate a globally unique identifier stream ID to the stream. The globally unique identifier stream ID may be a number or a letter. This is not limited in this application, provided that the streams are distinguished.

For example, if the total quantity of streams that can be supported by the solid-state drive 300 is eight, the data partition management module 310 returns, to the multi-stream management module 210, that the total quantity of streams supported by the solid-state drive 300 is eight. The storage controller 200 allocates corresponding stream IDs, for example, a stream 1 to a stream 8, to the eight streams.

In some embodiments, when the total quantity of streams supported by the solid-state drive 300 is one, if the flash memory storage system 100 includes two or more solid-state drives 300, the storage controller 200 may deliver a corresponding configuration instruction to each solid-state drive 300, for example, deliver a first configuration instruction to a solid-state drive 300A, and deliver a second configuration instruction to a solid-state drive 300B. The first configuration instruction includes that a first garbage collection policy corresponds to periodically updated data, and the second configuration instruction includes that a second garbage collection policy corresponds to data with a high update frequency. In this case, the solid-state drive 300A stores a correspondence between the periodically updated data and the first garbage collection policy, and the solid-state drive 300A stores a correspondence between the data with the high update frequency and the second garbage collection policy. When the garbage collection is subsequently performed, the solid-state drive 300A executes the first garbage collection policy, and the solid-state drive 300B executes the second garbage collection policy.

Step S53: The multi-stream management module 210 sets a garbage collection policy corresponding to each stream.

In this embodiment of this application, the multi-stream management module 210 sets a corresponding data type and a corresponding garbage collection policy for each stream based on the total quantity of supported streams. Specifically, the storage controller 200 may set each data type based on an actual situation, and then set, based on the total quantity of streams supported by the solid-state drive 300 and the specified data type, a data type corresponding to each stream. For example, the storage controller 200 is configured with data types, including periodically updated data, data with a high update frequency, data with a moderate update frequency, and data with a low update frequency. For example, the total quantity of streams supported by the solid-state drive 300 is four, and the storage controller 200 allocates stream IDs that are a stream 1 to a stream 4 to the four streams. The multi-stream management module 210 sets that the stream 1 corresponds to the periodically updated data and the first garbage collection policy, sets that the stream 2 corresponds to the data with the high update frequency and the second garbage collection policy, sets that the stream 3 corresponds to the data with the moderate update frequency (for example, warm data) and a third garbage collection policy, and sets that the stream 4 corresponds to the data with the low update frequency (for example, cold data) and a fourth garbage collection policy (for example, a Cost Benefit algorithm). For another example, the total quantity of streams supported by the solid-state drive 300 is eight, and the storage controller 200 allocates stream IDs that are a stream 1 to a stream 8 to the eight streams. The stream 1 and the stream 2 correspond to the periodically updated data and the first garbage collection policy, and so on.

In this embodiment of this application, the multi-stream management module 210 may set, for each stream, a data type of data transmitted by using the stream, then set, based on the data type corresponding to each stream, a garbage collection policy corresponding to each stream, and finally transmit the specified data type and the corresponding garbage collection policy (for example, in a configuration instruction manner) to the data partition management module 310.

In some other embodiments, the multi-stream management module 210 may set a garbage collection policy corresponding to each stream, then set, based on a data type corresponding to each garbage collection policy, a data type transmitted by using each stream, and finally transmit the specified data type and the corresponding garbage collection policy (for example, in a configuration instruction manner) to the data partition management module 310.

In this embodiment of this application, to reduce invalid migration, after a data type and a corresponding garbage collection policy are set, there is a clear correspondence between the data type and the garbage collection policy. The corresponding garbage collection policy can be derived based on the data type, and correspondingly, the corresponding data type can be derived according to the garbage collection policy.

It may be understood that a specific correspondence between the data type and the garbage collection policy is not limited in this application. For example, a Cost Benefit algorithm may also be used as a garbage collection policy of the data with the low update frequency.

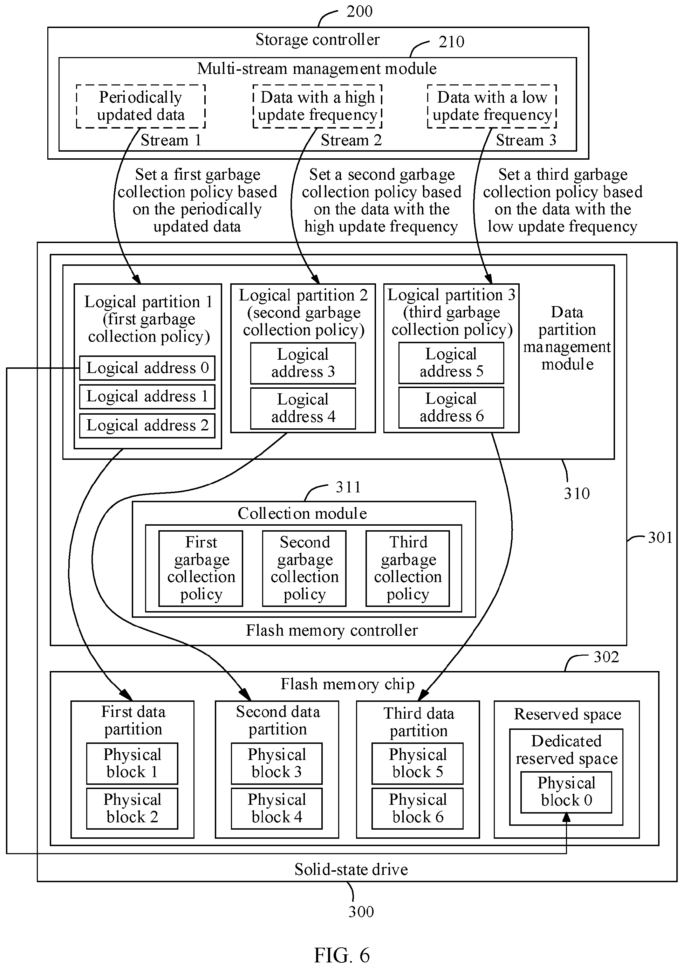

For example, refer to FIG. 6, the total quantity of streams supported by the solid-state drive 300 is three, and stream IDs of the three streams are respectively a stream 1, a stream 2, and a stream 3. The multi-stream management module 210 sets the stream 1 to transmit the periodically updated data, and a garbage collection policy corresponding to the stream 1 to be the first garbage collection policy. The multi-stream management module 210 sets the stream 2 to transmit the data with the high update frequency, and sets a garbage collection policy corresponding to the stream 2 to the second garbage collection policy. The multi-stream management module 210 sets the stream 3 to transmit the data with the low update frequency, and sets, based on a data type of the data with the low update frequency, a garbage collection policy corresponding to the stream 3 to the third garbage collection policy.

In this embodiment of this application, a communication interface between the solid-state drive 300 and the storage controller 200 is extended, to transmit, through a newly extended communication interface, a relationship between the data type set by the storage controller 200 and the corresponding garbage collection policy, that is, the configuration instruction.

In some embodiments, the storage controller 200 may be replaced with a host.

Step S54: The data partition management module 310 stores a correspondence between a stream, a garbage collection policy, and a data partition.

In this embodiment of this application, the data partition management module 310 receives the data type and the garbage collection policy that correspond to each stream and that are transmitted by the multi-stream management module 210, that is, a configuration instruction. The data partition management module 310 obtains, in response to the configuration instruction, the garbage collection policy corresponding to each stream. The data partition management module 310 is adapted to set a data partition corresponding to each stream, and record the correspondence between the stream, the garbage collection policy, and the data partition. A garbage collection policy corresponding to the data partition may be obtained based on the data partition corresponding to the stream and the corresponding garbage collection policy.

In this embodiment of this application, data types of data stored in a same data partition are the same, in other words, data of a same stream may be written into a same data partition of the solid-state drive 300. If data types corresponding to a plurality of different streams are the same, data of the plurality of different streams may be written into a same data partition of the solid-state drive 300.

As shown in the foregoing example, refer to FIG. 6. The data partition management module 310 sets the stream 1 to correspond to a logical partition 1, sets the stream 2 to correspond to a logical partition 2, and sets the stream 3 to correspond to a logical partition 3. The data partition management module 310 stores the logical partition 1 corresponding to the stream 1, and a garbage collection policy corresponding to the logical partition 1 is the first garbage collection policy. The data partition management module 310 stores the logical partition 2 corresponding to the stream 2, and a garbage collection policy corresponding to the logical partition 2 is the second garbage collection policy. The data partition management module 310 stores the logical partition 3 corresponding to the stream 3, and a garbage collection policy corresponding to the logical partition 3 is the third garbage collection policy.

The logical partitions 1 to 3 are logical storage space, that is, a partition corresponding to a logical address. The logical partition 1 corresponds to a first data partition on the flash memory chip 302, the logical partition 2 corresponds to a second data partition on the flash memory chip 302, and the logical partition 3 corresponds to a third data partition on the flash memory chip 302. Logical addresses 0 to 6 on the logical partitions 1 to 3 are logical addresses. The logical addresses 0 to 6 respectively correspond to physical blocks 0 to 6 on the flash memory chip 302. In other words, the first data partition includes physical blocks 1 and 2, the second data partition includes physical blocks 3 and 4, and the third data partition includes physical blocks 5 and 6. The physical block 0 corresponding to the logical address 0 is dedicated reserved space. The dedicated reserved space is from reserved space of the flash memory storage system 100 and allocated to the data partition corresponding to the first garbage collection policy for use.

In this embodiment of this application, when setting the first garbage collection policy, the storage controller 200 may set corresponding dedicated reserved space for the periodically updated data based on historical information of the periodically updated data, or may set fixed dedicated reserved space based on a specific data amount. For example, if the storage controller 200 detects that user data a of a user is updated once the user data a is stored up to 5G, the storage controller 200 may set fixed dedicated reserved space of 5G for the periodically updated data (the user data a).

The dedicated reserved space is a part of the reserved space of the flash memory storage system 100. For example, if the reserved space of the flash memory storage system 100 is 20G, and the storage controller 200 sets the dedicated reserved space corresponding to the first garbage collection policy to 5G, 5G is divided from 20G as the dedicated reserved space. The dedicated reserved space is used for a data update in the first data partition, and the remaining 15G is used for a data update in the second data partition and the third data partition.

The flash memory controller 301 stores the first data partition (logical partition 1) and the first garbage collection policy corresponding to the stream 1, the second data partition (logical partition 2) and the third garbage collection policy corresponding to the stream 2, and the third data partition (logical partition 3) and the third garbage collection policy corresponding to the stream 3. The collection module 311 may obtain, from the data partition management module 310, the garbage collection policy corresponding to each data partition. The collection module 311 stores the garbage collection policy customized by the storage controller 200, including the first garbage collection policy, the second garbage collection policy, and the third garbage collection policy.

When garbage collection is performed, the collection module 311 executes the first garbage collection policy on the first data partition (the physical blocks 1 and 2), in other words, does not perform garbage collection on the physical blocks 1 and 2; executes the second garbage collection policy on the second data partition (the physical blocks 3 and 4), in other words, when a garbage amount of the physical block 3 or the physical block 4 reaches a preset high threshold, performs garbage collection on the physical block, where for example, if a garbage amount in the physical block 3 accounts for 80% of the entire physical block 3, performs garbage collection on the physical block 3; and executes the third garbage collection policy on the third data partition (the physical blocks 5 and 6). If a garbage amount of the physical block 5 is greater than that of the physical block 6, the garbage collection is first performed on the physical block 5. After the physical block 5 is collected, if storage space has satisfied a requirement of this garbage collection task, the garbage collection is not performed on the physical block 6. Otherwise, the garbage collection is performed on the physical block 6.

In this embodiment of this application, when the solid-state drive supports two or more streams, the two or more streams correspond to different data types, and the two or more streams correspond to different garbage collection policies.

It should be noted that a storage capacity of the first data partition, a storage capacity of the second data partition, and a storage capacity of the third data partition may be different. For example, the first data partition includes 10 physical blocks, and the second data partition may include 5 physical blocks. Specifically, the storage capacity of the first data partition, the storage capacity of the second data partition, and the storage capacity of the third data partition may be configured based on an actual situation. This is not specifically limited in this application.

In this embodiment of this application, different streams of the storage controller 200 are bound to data partitions of different garbage collection policies in the solid-state drive 300, so that different data streams are written to different data partitions in the solid-state drive 300, and different garbage collection policies are used for different data partitions.

Step S55: The data partition management module 310 returns a setting success to the multi-stream management module 210.

In this embodiment of this application, if the data partition management module 310 stores the correspondence between the stream, the garbage collection policy, and the data partition, the data partition management module 310 returns the setting success to the multi-stream management module 210. Otherwise, a setting failure is returned, and the multi-stream management module 210 responds to the setting failure and performs a corresponding operation, for example, re-delivers the configuration instruction.

In this embodiment of this application, the storage controller 200 sets the data type and the corresponding garbage collection policy, and configures the corresponding garbage collection policy based on different data types; or configures the corresponding data type according to different garbage collection policies. In this way, when the garbage collection is performed subsequently, the data type may be fully considered, to avoid invalid migration.

In the foregoing example, the storage controller 200 has configured the solid-state drive 300. The following describes how to write data into the solid-state drive 300.

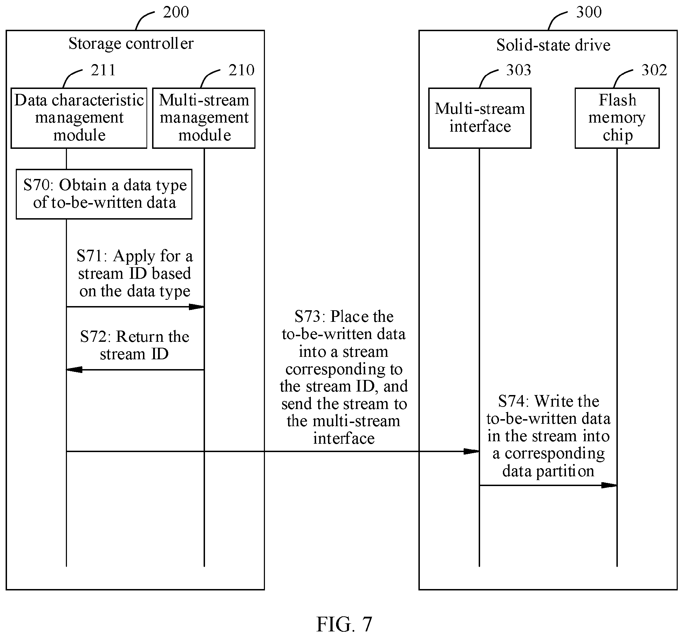

FIG. 7 shows an example of a procedure of a data writing method according to an embodiment of this application. The data writing method may be applied to the flash memory storage system 100 shown in FIG. 1.

As shown in FIG. 7, a storage controller 200 may further include a data characteristic management module 211. The data characteristic management module 211 is adapted to determine a data type of to-be-written data. For content of a multi-stream management module 210 in FIG. 7, refer to related content in FIG. 5 and FIG. 6. Details are not described herein again. For content of a flash memory chip 302 and a multi-stream interface 303 in FIG. 7, refer to related content in FIG. 1. Details are not described herein again.

Step S70: The data characteristic management module 211 obtains a data type of to-be-written data.

In this embodiment of this application, when the to-be-written data (for example, user data) is written into the storage controller 200, the data characteristic management module 211 receives the to-be-written data, and determines the data type of the to-be-written data. For example, the data type of the to-be-written data may be determined based on an access characteristic of the to-be-written data.

Step S71: The data characteristic management module 211 applies to the multi-stream management module 210 for a stream ID based on the data type.

As shown in FIG. 6, after the multi-stream management module 210 sets a data type corresponding to each stream, the data characteristic management module 211 may obtain, from the multi-stream management module 210, a stream ID corresponding to each data type. After determining the data type of each piece of to-be-written data, the data characteristic management module 211 applies, based on the stream ID corresponding to each data type, to the multi-stream management module 210 for a stream ID corresponding to the data type of the to-be-written data.

When the to-be-written data is periodically updated data, the storage controller determines that the stream ID is a first ID. When the to-be-written data is data with a high update frequency, the storage controller determines that the stream ID is a second ID. When the to-be-written data is data with a low update frequency, the storage controller determines that the stream ID is a third ID.

As shown in the foregoing example, refer to FIG. 6. If the to-be-written data is log data, it is determined that the to-be-written data is the periodically updated data, and then it may be determined that the stream ID corresponding to the to-be-written data is a stream 1 (the first ID), and the data characteristic management module 211 applies to the multi-stream management module 210 for the stream 1. If the to-be-written data is metadata, it is determined that the to-be-written data is the data with the high update frequency, and then it may be determined that the stream ID corresponding to the to-be-written data is a stream 2 (the second ID), and the data characteristic management module 211 applies to the multi-stream management module 210 for the stream 2. If the to-be-written data is cold data, it is determined that the to-be-written data is the data with the low update frequency, and then it may be determined that the stream ID corresponding to the to-be-written data is a stream 3 (the third ID), and the data characteristic management module 211 applies to the multi-stream management module 210 for the stream 3.

Step S72: The multi-stream management module 210 returns the stream ID to the data characteristic management module 211.

In this embodiment of this application, the multi-stream management module 210 returns, to the data characteristic management module 211, the stream ID applied by the data characteristic management module 211 in step S71. For example, the data characteristic management module 211 applies to the multi-stream management module 210 for the stream 1, and the multi-stream management module 210 returns the stream 1 to the data characteristic management module 211.

Step S73: The data characteristic management module 211 places the to-be-written data into a stream corresponding to the stream ID, and sends the stream to the multi-stream interface 303 of the solid-state drive 300.

In this embodiment of this application, the data characteristic management module 211 places, based on the stream ID returned by the characteristic management module 211, the to-be-written data into the stream corresponding to the stream ID, and sends the stream to the multi-stream interface 303 of the solid-state drive 300. The data characteristic management module 211 places the periodically updated data into a first stream corresponding to the first ID, and sends the first stream to the multi-stream interface 303. The data characteristic management module 211 places the data with the high update frequency into a second stream corresponding to the second ID, and sends the second stream to the multi-stream interface 303. The data characteristic management module 211 places the data with the low update frequency into a third stream corresponding to the third ID, and sends the third stream to the multi-stream interface 303.

Step S74: The multi-stream interface 303 writes the to-be-written data in the stream into a corresponding data partition in the flash memory chip 302.

In this embodiment of this application, the multi-stream interface 303 may obtain, from a flash memory controller 301, a data partition corresponding to each stream, and record a correspondence between each stream and the data partition. The multi-stream interface 303 writes to-be-written data in the first stream into a first data partition in the flash memory chip 302, writes to-be-written data in the second stream into a second data partition in the flash memory chip 302, and writes to-be-written data in the third stream into a third data partition in the flash memory chip 302.

In this embodiment of this application, the flash memory controller 301 of the solid-state drive 300 has stored the data partition corresponding to each stream and a garbage collection policy corresponding to each data partition. The data characteristic management module 211 writes, based on a multi-stream technology, data into the corresponding data partition in the solid-state drive 300 through the multi-stream interface 303, where each data partition is configured with, based on a data type of the data stored in the data partition, a garbage collection policy corresponding to the data partition.

In this embodiment of this application, data in the flash memory storage system 100 is written into a corresponding data partition in the solid-state drive 300 through multi-stream manner. In the storage controller 200, periodically updated data, data with a high update frequency, and data with a low update frequency may be roughly obtained through division based on a data access characteristic. Based on the multi-stream technology, the periodically updated data is written into the first data partition of the first garbage collection policy in the solid-state drive 300, the data with the high update frequency is written into the second data partition of the second garbage collection policy in the solid-state drive 300, and the data with the low update frequency is written into the third data partition of the third garbage collection policy in the solid-state drive 300. When the garbage collection is started in the solid-state drive 300, for the first data partition, data does not need to be migrated. When the data in the first data partition is invalid, an erase operation is directly performed, and no additional write amplification is generated. In this case, write amplification in the data in the first data partition is optimal. For the second data partition, the garbage collection is performed only on a physical block 312 whose garbage amount reaches a preset high amount. This greatly reduces write amplification in the second data partition. In addition, the third data partition is set to ensure that the physical block 312 that can be collected definitely exists when the garbage collection is performed.

In the foregoing embodiment, the storage controller 200 configures the solid-state drive 300.

In some embodiments, the solid-state drive 300 may be preconfigured. Before delivery of the solid-state drive 300, the solid-state drive 300 may be preconfigured based on the correspondence between the data type and the garbage collection policy.

It should be noted that related content in the foregoing embodiment in which the solid-state drive 300 is preconfigured is also applicable to this embodiment of this application, for example, a data partition, a data type, and a garbage collection policy. Details are not described herein again.

The flash memory controller 301 determines N data partitions from the flash memory chip 302, where the data partition is used to store data of a corresponding data type, and N is an integer greater than or equal to 1, and then records a garbage collection policy and a data type that correspond to the data partition. Specifically, the flash memory controller 301 may set a corresponding garbage collection policy for each stream with reference to the multi-stream management module 210. The flash memory controller 301 sets N data partitions based on a total quantity of streams supported by the solid-state drive 300, and sets data types and garbage collection policies that correspond to the N data partitions. For example, the total quantity of streams supported by the solid-state drive 300 is four, and the flash memory controller 301 sets N data partitions, where N is less than or equal to 4 and is greater than or equal to 1.

In this embodiment of this application, the flash memory controller 301 sets each data partition to store a data type and a garbage collection policy corresponding to each data partition. For example, the flash memory controller 301 sets the first data partition to store the periodically updated data, where the first data partition corresponds to the first garbage collection policy; sets the second data partition to store the data with the high update frequency, where the second data partition corresponds to the second garbage collection policy; and sets the third data partition to store the data with the low update frequency, where the third data partition corresponds to the third garbage collection policy.

In some embodiments, before delivery of the solid-state drive 300, the data partition management module 310 of the solid-state drive 300 has divided the flash memory chip 302 into data partitions, and records a stream ID corresponding to each data partition and a data type corresponding to each stream ID. A manufacturer that produces the solid-state drive 300 may notify a user of the data type corresponding to each stream ID of the solid-state drive 300. When the user uses the solid-state drive 300, the storage controller 200 is notified of the data type corresponding to each stream ID. When writing data to the solid-state drive 300, the storage controller 200 determines the stream ID based on a data type of the data, and writes the data into a corresponding stream based on the stream ID, to write the data into the data partition corresponding to the solid-state drive 300 by using the corresponding stream.

The following describes how to perform garbage collection on the configured solid-state drive 300.

A garbage collection method according to an embodiment of this application is described as an example. The garbage collection method is applied to the solid-state drive 300. A flash memory controller 301 performs garbage collection according to a garbage collection policy corresponding to each data partition.

In this embodiment of this application, a condition for triggering the flash memory controller 301 to perform garbage collection may be that a garbage collection processing instruction sent by a host connected to the solid-state drive 300 is received. Alternatively, when the flash memory controller 301 detects that a flash memory chip 302 stores a large amount of invalid data, or storage space of the flash memory chip 302 is small, a garbage collection mechanism needs to be used to release a resource. An occasion for performing garbage collection is not specifically limited in this application.

In this embodiment of this application, the flash memory chip 302 in the solid-state drive 300 includes a first data partition (corresponding to a first data partition in a first garbage collection policy) used to store periodically updated data, a second data partition (corresponding to a second data partition in a second garbage collection policy) used to store data with a high update frequency, and a third data partition (corresponding to a third data partition in a third garbage collection policy) used to store data with a low update frequency.

In this embodiment of this application, priorities may be allocated to the N data partitions. A priority of the first data partition is higher than a priority of the second data partition, and the priority of the second data partition is higher than a priority of the third data partition. In this case, when garbage collection is performed, garbage collection is performed on the N data partitions in descending order of priorities. In other words, the first garbage collection policy is first executed on the first data partition, and if the garbage collection further needs to be performed, the second garbage collection policy continues to be executed on the second data partition. Otherwise, the garbage collection ends. If the garbage collection further needs to be continued, the third garbage collection policy continues to be executed on the third data partition.

Specifically, the solid-state drive 300 (a collection module 311) first determines whether all data in a first physical block in the first data partition is invalid data, and if all the data in the first physical block in the first data partition is the invalid data, directly releases the first physical block. If all the data in the first physical block in the first data partition is not the invalid data, and the garbage collection further needs to be performed, the solid-state drive 300 determines whether the garbage collection can be performed on the second data partition. If the garbage collection can be performed on the second data partition, the solid-state drive 300 performs garbage collection on a second physical block in the second data partition according to the second garbage collection policy. If the garbage collection cannot be performed on the second data partition, the solid-state drive 300 performs garbage collection on a third physical block in the third data partition according to the third garbage collection policy.

That the solid-state drive 300 performs garbage collection on a second physical block in the second data partition according to the second garbage collection policy includes: The solid-state drive 300 determines the second physical block whose garbage amount reaches a preset high threshold in the second data partition, and performs garbage collection on the second physical block whose garbage amount reaches the preset high threshold.

That the solid-state drive 300 performs garbage collection on a third physical block in the third data partition according to the third garbage collection policy includes: The solid-state drive 300 sorts garbage amounts of the third physical block in the third data partition in descending order, and performs garbage collection on the third physical block in the third data partition based on the garbage amounts in descending order, until a collection resource satisfies a requirement of this garbage collection task.

In this embodiment of this application, after the first physical block in the first data partition is released, if the collection resource has satisfied the requirement of this garbage collection task, the garbage collection ends. When collecting the resource, the solid-state drive 300 does not migrate data in the first data partition. This can reduce a quantity of migration times, reduce a quantity of times of write amplification in the solid-state drive 300, reduce a long-tail delay of the solid-state drive 300, optimize performance of the solid-state drive 300, and increase a service life of the solid-state drive 300.

In this embodiment of this application, if the collection resource does not satisfy the requirement of this garbage collection task after the first physical block in the first data partition is released, the garbage collection continues to be performed on the second physical block in the second data partition according to the second garbage collection policy. When collecting the resource, the solid-state drive 300 collects, according to the second garbage collection policy, the second physical block whose garbage amount reaches the preset high threshold. This can reduce a quantity of data migration times, reduce a quantity of times of write amplification in the solid-state drive 300, reduce a long-tail delay of the solid-state drive 300, optimize performance of the solid-state drive 300, and increase a service life of the solid-state drive 300.

In this embodiment of this application, after the garbage collection is performed on the second physical block in the second data partition according to the second garbage collection policy, if the collection resource has satisfied the requirement of this garbage collection task, the garbage collection ends. If the collection resource does not satisfy the requirement of this garbage collection task after the garbage collection is performed on the second physical block in the second data partition according to the second garbage collection policy, the garbage collection continues to be performed on the third physical block in the third data partition according to the third garbage collection policy.

An embodiment of this application further provides a flash memory array, including M solid-state drives and the storage controller shown in FIG. 2, FIG. 3, FIG. 5, FIG. 6, and FIG. 7. The storage controller communicates with the M solid-state drives, M is an integer greater than or equal to 1, the solid-state drive includes N data partitions, and N is an integer greater than or equal to 1.

An embodiment of this application further provides a flash memory array, including a storage controller and M solid-state drives shown in FIG. 2, FIG. 3, FIG. 5, FIG. 6, and FIG. 7. The storage controller communicates with the M solid-state drives, M is an integer greater than or equal to 1, the solid-state drive includes N data partitions, and N is an integer greater than or equal to 1.

An embodiment of this application further provides an electronic device, including a host and a flash memory storage system. The host communicates with the flash memory storage system, and the flash memory storage system performs the data writing method in FIG. 7.

An embodiment of this application further provides a computer storage medium, including computer instructions. When the computer instructions are run on an electronic device, the electronic device is enabled to perform the foregoing solid-state drive configuration method or the foregoing garbage collection method.

An embodiment of this application further provides a computer program product. When the computer program product runs on a computer, the computer is enabled to perform the foregoing solid-state drive configuration method or the foregoing garbage collection method.

The electronic device, the computer storage medium, the computer program product, or the chip system provided in embodiments of this application are adapted to perform the corresponding methods provided above. Therefore, for beneficial effects that can be achieved, refer to the beneficial effects of the corresponding methods provided above. Details are not described herein again.

Based on the foregoing descriptions of the implementations, a person skilled in the art may clearly understand that, for a purpose of convenient and brief descriptions, division into the foregoing functional modules is merely used as an example for illustration. During actual application, the foregoing functions can be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division and may be other division in actual implementation. For example, a plurality of units or components may be combined or integrated into another apparatus, or some characteristics may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and parts displayed as units may be one or more physical units, may be located in one place, or may be distributed on a plurality of different places. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor 202 (processor) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. A solid-state drive configuration method, wherein the method comprises:
obtaining a data type corresponding to a stream supported by a solid-state drive, wherein the stream corresponds to a partition of the solid-state drive;
determining, based on the data type corresponding to the stream, a garbage collection policy corresponding to the stream; and
sending the garbage collection policy corresponding to the stream to the solid-state drive.

2. The solid-state drive configuration method according to claim 1, wherein when the solid-state drive supports two or more streams, the two or more streams correspond to different data types, and the two or more streams correspond to different garbage collection policies.

3. The solid-state drive configuration method according to claim 1 or 2, wherein the determining, based on the data type corresponding to the stream, a garbage collection policy corresponding to the stream comprises:
when the data type corresponding to the stream is periodically updated data, determining that the garbage collection policy corresponding to the stream is a first garbage collection policy, wherein the first garbage collection policy is skipping performing garbage collection on a first physical block, and setting dedicated reserved space, and the first physical block is used to store the periodically updated data;
when the data type corresponding to the stream is data with a high update frequency, determining that the garbage collection policy corresponding to the stream is a second garbage collection policy, wherein the second garbage collection policy is performing garbage collection on a second physical block when a garbage amount of the second physical block reaches a preset high threshold, and the second physical block is used to store the data with the high update frequency; or
when the data type corresponding to the stream is data with a low update frequency, determining that the garbage collection policy corresponding to the stream is a third garbage collection policy, wherein the third garbage collection policy is performing garbage collection on a third physical block in descending order of garbage amounts, and the third physical block is used to store the data with the low update frequency.

4. The solid-state drive configuration method according to any one of claims 1 to 3, wherein the obtaining a data type corresponding to a stream supported by a solid-state drive comprises:
obtaining a total quantity of streams supported by the solid-state drive; and
creating the stream based on the total quantity, and setting the corresponding data type for the stream.

5. A storage controller, wherein the storage controller comprises a processor and a memory, and the processor executes computer instructions in the memory, to obtain a data type corresponding to a stream supported by a solid-state drive, wherein the stream corresponds to a partition of the solid-state drive; determine, based on the data type corresponding to the stream, a garbage collection policy corresponding to the stream; and send the garbage collection policy corresponding to the stream to the solid-state drive.

6. The storage controller according to claim 5, wherein when the solid-state drive supports two or more streams, the two or more streams correspond to different data types, and the two or more streams correspond to different garbage collection policies.

7. The storage controller according to claim 5 or 6, wherein the determining, based on the data type corresponding to the stream, a garbage collection policy corresponding to the stream comprises:
when the data type corresponding to the stream is periodically updated data, determining that the garbage collection policy corresponding to the stream is a first garbage collection policy, wherein the first garbage collection policy is skipping performing garbage collection on a first physical block, and setting dedicated reserved space, and the first physical block is used to store the periodically updated data;
when the data type corresponding to the stream is data with a high update frequency, determining that the garbage collection policy corresponding to the stream is a second garbage collection policy, wherein the second garbage collection policy is performing garbage collection on a second physical block when a garbage amount of the second physical block reaches a preset high threshold, and the second physical block is used to store the data with the high update frequency; or
when the data type corresponding to the stream is data with a low update frequency, determining that the garbage collection policy corresponding to the stream is a third garbage collection policy, wherein the third garbage collection policy is performing garbage collection on a third physical block in descending order of garbage amounts, and the third physical block is used to store the data with the low update frequency.

8. The storage controller according to any one of claims 5 to 7, wherein the obtaining a data type corresponding to a stream supported by a solid-state drive comprises:
obtaining a total quantity of streams supported by the solid-state drive; and
creating the stream based on the total quantity, and setting the corresponding data type for the stream.

9. A solid-state drive configuration method, applied to a solid-state drive, wherein the method comprises:
determining a data partition, wherein the data partition is used to store data of a corresponding data type; and
configuring, based on the data type corresponding to the data partition, a garbage collection policy corresponding to the data partition.

10. The solid-state drive configuration method according to claim 9, wherein when there are a total of two or more data partitions, the two or more data partitions correspond to different data types, and the two or more data partitions correspond to different garbage collection policies.

11. The solid-state drive configuration method according to claim 9, wherein the data partition comprises one or more of a first data partition, a second data partition, and a third data partition, the first data partition is used to store periodically updated data, the second data partition is used to store data with a high update frequency, and the third data partition is used to store data with a low update frequency.

12. The solid-state drive configuration method according to claim 11, wherein the configuring a garbage collection policy corresponding to the data partition comprises:
configuring a garbage collection policy corresponding to the first data partition as a first garbage collection policy, wherein the first garbage collection policy is skipping performing garbage collection on the first data partition, and setting dedicated reserved space;
configuring a garbage collection policy corresponding to the second data partition as a second garbage collection policy, wherein the second garbage collection policy is performing garbage collection on the second data partition when a garbage amount of the second data partition reaches a preset high threshold; and
configuring a garbage collection policy corresponding to the third data partition as a third garbage collection policy, wherein the third garbage collection policy is performing garbage collection on the third data partition in descending order of garbage amounts.

13. The solid-state drive configuration method according to any one of claims 9 to 12, wherein the determining a data partition comprises:
obtaining a total quantity of streams supported by the solid-state drive; and
determining N data partitions based on the total quantity, wherein N is less than or equal to the total quantity.

14. The solid-state drive configuration method according to any one of claims 9 to 13, wherein the data partition comprises one or more physical blocks.

15. A solid-state drive, wherein the solid-state drive comprises a flash memory controller and a flash memory chip;
the flash memory controller is adapted to determine a data partition from the flash memory chip, wherein the data partition is used to store data of a corresponding data type; and
the flash memory controller is further adapted to configure, based on the data type corresponding to the data partition, a garbage collection policy corresponding to the data partition.

16. The solid-state drive according to claim 15, wherein when there are a total of two or more data partitions, the two or more data partitions correspond to different data types, and the two or more data partitions correspond to different garbage collection policies.

17. The solid-state drive according to claim 15, wherein the data partition comprises one or more of a first data partition, a second data partition, and a third data partition, the first data partition is used to store periodically updated data, the second data partition is used to store data with a high update frequency, and the third data partition is used to store data with a low update frequency.

18. The solid-state drive according to claim 17, wherein the configuring a garbage collection policy corresponding to the data partition comprises:
configuring, by the flash memory controller, a garbage collection policy corresponding to the first data partition as a first garbage collection policy, wherein the first garbage collection policy is skipping performing garbage collection on the first data partition, and setting dedicated reserved space;
configuring, by the flash memory controller, a garbage collection policy corresponding to the second data partition as a second garbage collection policy, wherein the second garbage collection policy is performing garbage collection on the second data partition when a garbage amount of the second data partition reaches a preset high threshold; and
configuring, by the flash memory controller, a garbage collection policy corresponding to the third data partition as a third garbage collection policy, wherein the third garbage collection policy is performing garbage collection on the third data partition in descending order of garbage amounts.

19. The solid-state drive according to any one of claims 15 to 18, wherein that the flash memory controller is adapted to determine a data partition from the flash memory chip comprises:
the flash memory controller is adapted to: obtain a total quantity of streams supported by the solid-state drive, and determine N data partitions based on the total quantity, wherein N is less than or equal to the total quantity.

20. The solid-state drive according to any one of claims 15 to 19, wherein the data partition comprises one or more physical blocks.

21. A data writing method, applied to a flash memory storage system, wherein the flash memory storage system comprises a storage controller and a solid-state drive, the solid-state drive comprises a data partition, a corresponding garbage collection policy is configured for the data partition, and the garbage collection policy is configured based on a data type corresponding to the data partition;
the storage controller obtains to-be-written data;
the storage controller determines a stream ID based on the data type of the to-be-written data;
the storage controller places the to-be-written data into a stream corresponding to the stream ID, and sends the stream to the solid-state drive; and
the solid-state drive writes the to-be-written data in the stream into a corresponding data partition, wherein a data type corresponding to the data partition is the same as the data type of the to-be-written data.

22. The data writing method according to claim 21, wherein the data partition comprises one or more of a first data partition, a second data partition, and a third data partition;
when the to-be-written data is periodically updated data, the storage controller determines that the stream ID is a first ID, places the to-be-written data into a first stream corresponding to the first ID, and sends the first stream to the solid-state drive; and
that the solid-state drive writes the to-be-written data in the stream into the corresponding data partition comprises:
writing, by the solid-state drive, the to-be-written data in the first stream into the first data partition, wherein the first data partition is associated with the first stream, a garbage collection policy corresponding to the first data partition is a first garbage collection policy, and the first garbage collection policy is skipping performing garbage collection on the first data partition, and setting dedicated reserved space;
when the to-be-written data is data with a high update frequency, the storage controller determines that the stream ID is a second ID, places the to-be-written data into a second stream corresponding to the second ID, and sends the second stream to the solid-state drive; and
that the solid-state drive writes the to-be-written data in the stream into a corresponding data partition comprises:
writing, by the solid-state drive, the to-be-written data in the second stream into the second data partition, wherein the second data partition is associated with the second stream, a garbage collection policy corresponding to the second data partition is a second garbage collection policy, and the second garbage collection policy is performing garbage collection on the second data partition when a garbage amount of the second data partition reaches a preset high threshold; or
when the to-be-written data is data with a low update frequency, the storage controller determines that the stream ID is a third ID, places the to-be-written data into a third stream corresponding to the third ID, and sends the third stream to the solid-state drive; and
that the solid-state drive writes the to-be-written data in the stream into a corresponding data partition comprises:
writing, by the solid-state drive, the to-be-written data in the third stream into the third data partition, wherein the third data partition is associated with the third stream, a garbage collection policy corresponding to the third data partition is a third garbage collection policy, and the third garbage collection policy is performing garbage collection on the third data partition in descending order of garbage amounts.

23. A garbage collection method, applied to a solid-state drive, wherein the solid-state drive comprises a data partition, a corresponding garbage collection policy is configured for the data partition, and the garbage collection policy is configured based on a data type corresponding to the data partition, and the garbage collection method comprises:
performing garbage collection on the data partition according to the garbage collection policy corresponding to the data partition.

24. The garbage collection method according to claim 23, wherein the data partition comprises one or more of a first data partition, a second data partition, and a third data partition;
the first data partition is used to store periodically updated data, a garbage collection policy corresponding to the first data partition is a first garbage collection policy, and the first garbage collection policy is skipping performing garbage collection on the first data partition, and setting dedicated reserved space;
the second data partition is used to store data with a high update frequency, a garbage collection policy corresponding to the second data partition is a second garbage collection policy, and the second garbage collection policy is performing garbage collection on the second data partition when a garbage amount of the second data partition reaches a preset high threshold; and
the third data partition is used to store data with a low update frequency, a garbage collection policy corresponding to the third data partition is a third garbage collection policy, and the third garbage collection policy is performing garbage collection on the third data partition in descending order of garbage amounts.

25. The garbage collection method according to claim 24, wherein when the solid-state drive comprises two or three of the first data partition, the second data partition, and the third data partition, the method further comprises:
performing garbage collection on the data partition in descending order of priorities, wherein a priority of the first data partition is higher than the priority of the second data partition, and a priority of the second data partition is higher than a priority of the third data partition.

26. A flash memory array, comprising M solid-state drives and the storage controller according to any one of claims 5 to 8, wherein the storage controller communicates with the M solid-state drives, M is an integer greater than or equal to 1, and the solid-state drive comprises a data partition.

27. A flash memory array, comprising a storage controller and M solid-state drives according to any one of claims 15 to 20, wherein the storage controller communicates with the M solid-state drives, and M is an integer greater than or equal to 1.

28. An electronic device, comprising a host and a flash memory storage system, wherein the host communicates with the flash memory storage system, and the flash memory storage system performs the data writing method according to either of claims 21 and 22.

29. A computer storage medium, comprising computer instructions, wherein when the computer instructions are run on an electronic device, the electronic device is enabled to perform the solid-state drive configuration method according to any one of claims 1 to 4, or the solid-state drive configuration method according to any one of claims 9 to 14, or the garbage collection method according to any one of claims 23 to 25.

30. A computer program product, wherein when the computer program product runs on a computer, the computer is enabled to perform the solid-state drive configuration method according to any one of claims 1 to 4, or the solid-state drive configuration method according to any one of claims 9 to 14, or the garbage collection method according to any one of claims 23 to 25.
